# EUROPÄISCHE PATENTSCHRIFT

(11) **EP 3 016 793 B1**
(45) Veröffentlichungstag und Bekanntmachung des Hinweises auf die Patenterteilung: **06.09.2017**
(21) Anmeldenummer: 14754988.5
(22) Anmeldetag: 30.06.2014
(51) Int. Cl.: B29C 49/06, B29B 11/08, B29C 49/64, B29C 49/42

(54) **VERFAHREN UND VORRICHTUNG ZUR HERSTELLUNG EINER OPTIMIERTEN BODENKONTUR AN PREFORMEN**
METHOD AND DEVICE FOR THE PRODUCTION OF AN OPTIMIZED BOTTOM CONTOUR ON PREFORMS
PROCÉDÉ ET DISPOSITIF DE RÉALISATION D'UN PROFIL DE FOND OPTIMISÉ SUR DES PRÉFORMES

(30) Priorität: 01.07.2013 DE 102013011315
(43) Veröffentlichungstag der Anmeldung: 11.05.2016
(73) Patentinhaber: Aktas, Mahir, 35330 Balcova Izmir (TR)
(72) Erfinder: Aktas, Mahir, 35330 Balcova Izmir (TR)
(74) Vertreter: Patentanwälte Klickow & Partner Partnerschaftsgesellschaft mbB
(86) Internationale Anmeldenummer: PCT/DE2014/000335
(87) Internationale Veröffentlichungsnummer: WO 2015/000459

(56) Entgegenhaltungen:
- EP-A2- 0 322 651
- WO-A1-2012/075578
- JP-A- S58 209 533

## Beschreibung

Die vorliegende Erfindung betrifft ein Verfahren und eine Vorrichtung zur Herstellung von Preformen zur Ausformung einer vorteilhaften Boden- und Schultergeometrie für den folgenden Blasprozess in erster Wärme oder zweiter Wärme.

Preformen sind Vorprodukte innerhalb der PET-Flaschenherstellung die entweder im integrierten Verfahren (Einstufenprozess) sofort nach der Herstellung im noch heissen Zustand oder im Zweistufenprozess nach der Abkühlung vom Herstellprozess in einer zweiten Prozessstufe zu PET-Flaschen streckgeblasenen werden.

Für die in dieser Erfindung beschriebene übliche Herstellung von Preformen wird Kunststoffrohmaterial plastifiziert und anschliessend mit hohem Druck in ein Ein- oder Mehrkavitäten-Formwerkzeug gepresst.

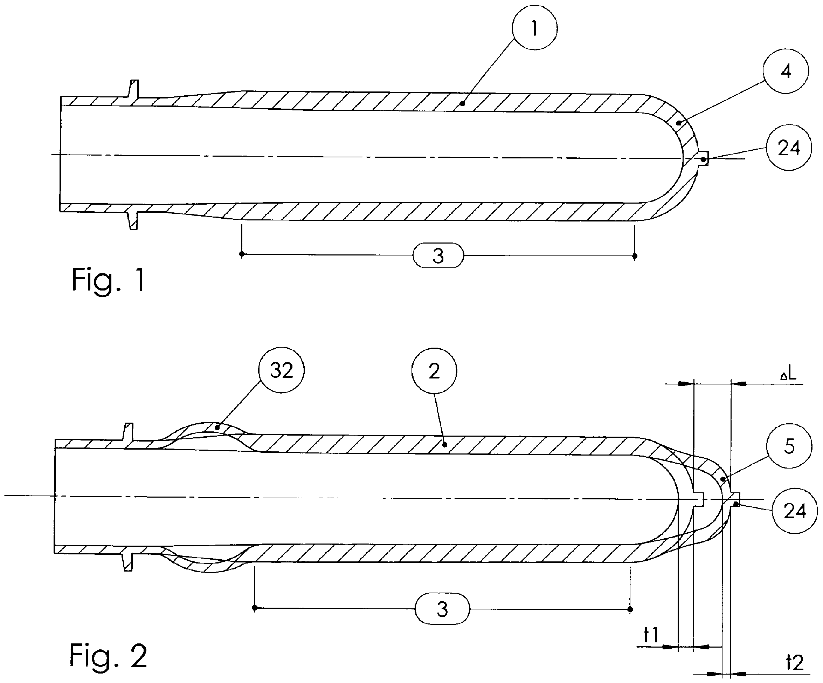

Es entstehen Preformen gemäss FIG.1, welche geometrisch im Wesentlichen aus einem Hals-und Schaftbereich und einer Bodenkuppe bestehen, sowie innen durch den Einsatz eines Kernes im Formwerkzeug hohl sind. Der Halsbereich ist derart geformt, dass er beispielsweise mit einer Schraubkappe wiederverschliessbar ausgestaltet sein kann. Dieser erfährt während des Blasprozesses jedoch keine weitere Veränderung. Der Schaftbereich und die Bodenkuppe werden dagegen bei erhöhten Temperaturen zu Hohlkörpern aufgeblasen, wodurch der Kunststoff verstreckt wird und sich dabei erheblich verfestigt. Daher sind die zu verformenden Preformbereiche geometrisch im Zusammenspiel mit der Kerngeometrie für die sich später einstellende Flaschenqualität verantwortlich.

Im hier beispielhaft dargestellten Einstufenprozess werden üblicherweise eine Spritzgiessform und eine nachfolgende Blasform eingesetzt. Da der Spritzgiessvorgang deutlich länger als der Blasvorgang dauert, gibt es Systemlösungen bei denen die Anzahl der Spritzgiesskavitäten ein Vielfaches der Blaskavitäten beträgt.

Der spritzgegossene Preform, dessen Aussenhaut im direkten Kontakt mit dem intensiv gekühlten Formstahl steht, erstarrt dort folglich schnell und kann somit schadensfrei und ohne mechanische Deformation entformt werden. Der Preform kann dank der erheblichen Restwärme im Inneren der Preformwandung, die zu einer Rückerwärmung und damit verbundenen Rückerweichung führt ohne weiteren Einsatz von Wärmeenergie beim Einstufenverfahren im nächsten Produktionsschritt zum Hohlkörper aufgeblasen werden. Es ist jedoch sehr schwierig, dem Preform ein für das Streckblasen optimales Wärmeprofil zu geben - es sei denn, dass die Einstufen Spritzstreckblasmaschine mit einer zusätzlichen Station mit IR-Heizung oder Konditionierstation ausgestattet ist, die Einfluss auf das Wärmeprofil nehmen kann. Aber auch dann ist das Wärmeprofil - besonders im Boden- und Schulterbereichnoch immer nicht optimal. Der Boden und die Schulter zeigen am fertigen Hohlkörper häufig übermässige Materialansammlungen auf.
Beim Zweistufenverfahren wird der Preform zwar gezielt wiedererwärmt, doch ist es nach heutigem Stand der Technik nicht möglich der Boden - und Schulterpartie für ein optimales Blasergebnis ausreichend Wärmeenergie zuzuführen. Dies ist vor allem durch die Lage von Schulter und Boden zur IR Heizung zu erklären.
Aus der WO 2012/075578 A1 ist bereits ein Verfahren zur Herstellung eines Vorformlings bekannt, der eine optimierte Bodengeometrie aufweist. Es liegt bei diesen Vorformlingen im Bereich der Bodenkuppe eine dünnere Wandstärke als im Bereich eines Schaftes vor. Die Wandstärke gleicht sich im Verlauf vom Anguss bis zum Schaft graduell an. Unter Verwendung von Konditionierstationen werden die Vorformlinge temperiert.
Der Preform, wie er in Fig. 1 dargestellt ist, entspricht dem heutigen Stand der Technik, bei dem es unausweichlich ist, dass die Wanddicken des Preforms besonders im Bereich der Bodenkuppe und des Schaftes ähnliche Wandstärken aufweisen. Friert das Material durch dünnere Wandstärken im Angussbereich frühzeitig ein, kann das Schrumpfen in der Abkühlphase durch ein Nachdrücken der Schmelze, mit Wirkung auf den gesamten Preform einschliesslich dem Halsbereich, nicht vermieden werden, was in der Konsequenz zu ungewünschten Einfallstellen in kritischen Bereichen des Preforms führt. Aus diesem Grund kann die Preform-Geometrie, wie sie in Fig. 2 gezeigt ist und deren Vorteile nachfolgend noch erläutert werden, nicht im bekannten Spritzgiessverfahren hergestellt werden. Die Wandstärke im Bereich der Schulter, aber vor allem in der nahe am Anguss gelegenen Preformkuppe ist wesentlich dünner als im weiteren Verlauf des Preformschaftes und somit ist das verfrühte Einfrieren dieses dünnen Bereiches unvermeidlich.

Die zentrale Aufgabe der hier vorliegenden Erfindung ist, ein Verfahren und eine Vorrichtung zu beschreiben, bei denen sich Preformen mit wesentlich günstigeren Schulter- und Bodenkonturen, welche für das nachfolgende Streckblasen vorteilhaft sind, erzeugen zu können und deren Lösung mit ihren Merkmalen in den Ansprüchen 1 und 13 beschrieben ist.

Mit einer Umformung der Preform-Boden- und Schulterkontur kann deren Oberfläche in diesen Bereichen vergrössert werden. Dies hat bereits Vorteile, da die Infrarotheizungen der nachfolgenden Blasmaschinen über diese vergrösserte Oberfläche effizienter Wärmeenergie einbringen können und die Reckstange der Blasmaschine während des Blasprozesses die Wandstärke der fertigen Flasche besser beeinflussen kann.

Die Vorteile einer optimierten Bodenform wird beispielsweise in WO 2008/041186 A2 beschrieben und ist in der Fachwelt als "Capello-Design" bekannt. Da die dort beschriebene Bodenkontur bereits während des Spritzgiessprozesses hergestellt wird kann diese zwar beliebig gestaltet werden, auf die Wandstärke kann wegen der vorgängig beschriebenen physikalischen Eigenschaften jedoch kaum Einfluss genommen werden.

In einer wesentlich dünneren Wandstärke der Preformkuppe liegt aber der eigentliche Vorteil für das spätere Ausblasen des Flaschenbodens. Diese Ausführung wird auch in der Anmeldung WO 2010/149522 A1 beschrieben. Es ist erkannt worden, dass deutlich dünnere Wandstärken, als sie durch Spritzgiessen erreicht werden können, im Kuppenbereich des Preforms vorteilhaft sind. Hier wird der im Standardprozess hergestellte Preform in der nachfolgenden Kühlhülse mit Pressluft unter Druck gesetzt. Die Kühlhülse ist dabei derart ausgebildet, dass der Bodenbereich sich noch aufblähen kann, bis die vergrösserte Bodenkontur dieser Deformation ein Ende setzt. Dies führt zur gewünschten Oberflächenvergrösserung bei gleichzeitiger Verringerung der Wandstärke. Dieses Verfahren ist in seinem Ergebnis deutlich besser als das Capello-Design, jedoch ist der Aufblasvorgang kaum zu kontrollieren. So kann es durch inhomogene Temperaturen dazu kommen, dass der Anguss aus dem Zentrum weicht. Zudem ist der präzise Wandstärkenverlauf im Kuppenbereich nicht vorhersagbar, sondern unterliegt dem zufälligen, thermischen Umfeld der Preformkuppe.
In WO 2013/123931 A2 wird das mechanische Ausprägen von Preformkuppen bereits beschrieben. Doch ist es von grosser Bedeutung, dass auch im Schulterbereich prägende Umformungen ebenso wichtig und effizient sind. Es ist auch in diesem Zusammenhang zu erwähnen, dass ein am Kühlhülsenboden angelegtes Vakuum eine deutliche Verbesserung des Prägeprozesses im Preformboden nach sich zieht.

Die Druckschrift WO 2012/075578 offenbart ein Verfahren zur Herstellung eines Preforms mit optimierter Bodengeometrie, wobei der fertig hergestellte Preform eine dünnere Wandstärke im Bodenkuppenbereich als im Preformschaft aufweist und dessen Wandstärke sich im Verlauf vom Anguss zum Preformschaft graduell angleicht, wobei das Formwerkzeug nach Erstarren der Aussenhaut nach erster Kühlung geöffnet wird, die Preforms mittels Transportvorrichtungen aus dem geöffneten Formwerkzeug aufgenommen werden, die Preforms in Konditionierstationen, deren Aufgabe es je nach Verfahren ist, die Preformen schnellstmöglich abzukühlen, eingesetzt werden, wobei die Preforms in Konditionierhülsen durch direkten Kontakt vor dem Prägevorgang bis auf die Preformkuppe konditioniert bzw. gekühlt werden, wobei somit die plastisch verformbare Preformkuppe mechanisch mit einem Prägekörper in Abhängigkeit zur Konditionierstation entsprechend reproduzierbar durch Prägen verformt wird, wobei die innere Kontur der Konditionierstation und des Prägekörpers derart ausgestaltet sind, dass diese Konturen weitestgehend nach dem Verformungsvorgang am Preform reproduzierbar bildbar sind, während die Preformkuppen nach dem Prägevorgang durch die Wandberührung der Konditionierstation ebenfalls konditioniert werden. Die Druckschrift WO 2012/075578 offenbart dazu eine Vorrichtung zur Herstellung eines Preforms mit einer für den Blasprozess optimierten Kuppengeometrie, wobei der weitere Wanddickenverlauf in der Kuppe vom Angusspunkt ausgehend sich graduell der Wandstärke des Preformschaftes anpasst, wobei ein Formwerkzeug mit einem oder mehreren Formkavitäten für die erste Formgebung Preform-Geometrien verantwortlich ist, wobei eine Spritzgiessvorrichtung Kunststoffrohware plastifiziert um diese plastische Masse in die Kavitäten eines geschlossenen Formwerkzeuges unter Druck einzubringen, 1.1 wobei eine Transportvorrichtung die Preformen in eine Konditionierstation befördert und dort in eine Konditionieraufnahme deren innere Geometrie den Preformschaft durch Flächenkontakt thermisch beeinflusst, Dorne mit einem gelagerten Prägekörper, axial in die offenen Preformen eintauchen, durch die speziell ausgelegte Geometrie der Hülse und des Prägekörpers sowie die axiale Bewegung des Prägekörpers, im Bereich der Preformkuppe eine Umformung entsteht. Eine physikalische Grundlage der Erfindung ist darin zu sehen, dass die aus dem Werkzeug entnommenen Preformen grundsätzlich rückerweichen, d.h. sich auf ein bestimmtes Temperaturniveau um 90-130°C einstellen und dadurch wieder leicht verformbar werden. Das Temperaturprofil des Preforms ist nach der Rückerweichung für den etwaigen folgenden Blasprozess durch Kühlen oder Heizen nur schwer zu optimieren, so dass sich das Material häufig während dieses Prozessschrittes nicht wie gewünscht, gleichmässig aus dem Boden und der Schulter ziehen lässt.

Das Kunststoffmaterial hat während des Blasvorganges, welches das Material biaxial verstreckt die Eigenschaft, sich durch das Verstrecken zu verfestigen. Somit neigt das Material grundsätzlich dazu, dass die Bereiche des Preforms mit dem geringsten Verstreckungsgrad und hohem Temperaturniveau am ehesten bereit ist, unter dem Blasdruck nachzugeben und sich ausformen zu lassen. Dadurch kann der Angussbereich im späteren Flaschenboden und der Schulterbereich nicht völlig verstreckt werden, was örtlich zu Materialanhäufungen führt. Diese Materialanhäufungen führen in den meisten Fällen zu einer Verdickung des entsprechenden Flaschenbereiches und schwächen ihn dabei sogar, da das wenig verstreckte Material nicht seine mögliche Verfestigung ausschöpft. Dieses Material gilt es einzusparen.

Die Einsparung kann erreicht werden, in dem der Preformboden und der Schulterbereich gezielt mechanisch verformt werden. Dazu wird der Prefom in einer nachfolgenden Konditionierstation, welcher abgesehen vom Kuppenbereich und dem Schulterbereich die exakte Geometrie des Preforms aufweist, auf seinem blasfähigen Temperaturzustand gehalten, während er im zweistufigen Verfahren dort intensiv abgekühlt wird. Gleichzeitig kann mittels speziell ausgeformten Prägekörpern in Kombination einer speziellen Kontur im Kuppenbereich und im Schulterbereich der Konditionierstation der Preform derart verformt werden, dass die kritischen Bereiche möglichst dünn werden, während die Wandstärke von der Kuppe in ihrem weiteren Verlauf übergangslos die Schaftdicke annimmt und an der Schulter wieder an langsam an Wandstärke verliert. Dadurch wird eine sprunghafte Wanddickenänderung vermieden, die beim Blasprozess der Flasche nachhaltig stören würde. Normaler Weise ist davon auszugehen, dass der Preform durch den Prägevorgang eine Gesamtlängung während des Prägevorgangs erfährt, was vermieden werden muss, da sonst auch der gesamte Preformschaft einer geometrischen Veränderung unterliegen würde. Ein reproduzierbares Prägen wird gewährleistet, in dem der originale Kuppenverlauf des Preforms in der Innengeometrie der Konditionierstation für einen kleinen Bereich folgt, bevor die optimierte Prägegeometrie beginnt, so dass für den Preform eine kleine Stützfläche mit einem Hinterschnitt von wenigen zehntel Millimetern entsteht. Auf diese Weise wird der Preform zuverlässig positioniert, wodurch die Prägekräfte sich nicht auf den gesamten Preformschaft, sondern nur auf den zu verformenden Bereich der Kuppe auswirken können.

Der für den Preformboden aus solidem Material hergestellte Prägekörper, wie beispielsweise Teflon oder Aluminium, ist dahingehend gestaltet, dass er vorzugsweise beim Deformationsvorgang zuerst den Angusspunkt berührt und erst im weiteren axialen Bewegungsverlauf nach und nach den gesamten Kuppenbereich, immer vom Anguss ausgehend, ebenfalls prägend verformt. In Abhängigkeit des Preformdurchmessers und der Temperatur der Preformkuppe sind axiale Prägekräfte von 5 bis 100N sinnvoll, sie können aber auch deutlich höher sein. Hier könnte beispielsweise für eine kugelige Preformkuppenkontur ein elliptischer oder kegeliger Prägekörper ideal sein. Es ist aber auch denkbar, plastisch verformbare Prägekörper einzusetzen, die beispielsweise aus Silikon hergestellt sein können. Solche Prägekörper ermöglichen es, den Prägevorgang nicht direkt am Anguss zu starten, sondern an einer beliebigen Stelle innerhalb der Kuppe. Durch die elastische Verformbarkeit des Prägedorns würde der Angussbereich erst später verformt werden. Dabei ist es von Vorteil, wenn nach dem Verformungsvorgang die Bodenkontur des Preforms innen präzise den Prägekörper und aussen die Bodengeometrie der Konditionierstation abbildet. Die nach dem Prägeprozess umgeformte Preformkuppe, welche dann ebenfalls in intensiven Kontakt mit der Konditionierstation steht, kann dann beliebig temperiert werden.

Der Prägevorgang in der Preformkuppe kann in seiner Prägearbeit durch aktives temperieren des Prägekörpers beeinflusst werden. Dabei wird der Prägedorn bevorzugt zwischen 90 und 130°C erwärmt, er kann aber bei Bedarf auch gekühlt werden. Eine weitere Unterstützung des Prägens besonders im Bodenbereich kann ein erhöhtes Vakuum in der Kühlhülse sein.

Für den Schulterbereich muss grundsätzlich ein verformbares Material eingesetzt werden, welches sich durch ein Zusammendrücken ausweitet und damit den Schulterbereich ausprägt.

Ein Preform mit beschriebenen, umgeformten Boden und Schulter bietet für den nachfolgenden Streckblasprozess grosse Vorteile. Der Angusspunkt, welcher im Blasprozess durch eine Reckstange berührt und damit gekühlt wird und durch die Längsverstreckung auch mit der kühlenden Blasform als erstes in Kontakt gerät, lässt diesen Bereich schnell erkalten. Durch diese Begebenheit kann das Material im Bodenbereich, ganz besonders am Anguss nicht zufriedenstellend verstreckt werden, wodurch die meisten streckgeblasenen Kunststoff-Flaschen dort eine unnötige Materialanhäufung aufweisen, die sogar zur Schwächung des Bodens führen können.

Die neu geformte Preformkuppe, welche durch den Prägevorgang wesentlich dünnere Preformwandstärken am und um den Angusspunkt für den folgenden Blasprozess aufweist, kann mit gezielter Materialverteilung im Boden zum Hohlkörper aufgeblasen werden. Darüber hinaus wird der Bodenbereich durch die nun möglichen höheren Verstreckungsgrade zusätzlich verfestigt, wodurch die Qualität des Flaschenbodens deutlich erhöht wird. Dabei ist es vorteilhaft, wenn sich der geprägte Bereich im weiteren Kuppenverlauf zum übergangslosen Anschluss an den Preformschaft verdickt. Dies gilt im gleichen Mass auch für den Schulterbereich, der sich nun durch die dünnere Wandung wesentlich besser verstrecken lässt und damit ebenfalls Material eingespart werden kann.

Eine weitere Möglichkeit besteht, die Preformböden in Formen auszuprägen, die der fertigen Bodenform der Flasche entgegenkommen. Flaschen können beispielsweise oval sein oder die Böden besitzen Füsschen wodurch die gleichmässige Materialverteilung beim Streckblasen im Bodenbereich erschwert wird. Durch die formgebende Vorbereitung der Preformböden kann später eine bessere Materialverteilung erzielt werden. Diese Formgebung kann am Prägedorn oder in der Kühlhülse eingebracht werden. Selbstverständlich kann dies auch an beiden Orten gleichzeitig geschehen.

Grundsätzlich hat das Prägeverfahren auf die Produktionszykluszeit keinen Einfluss, da die Zeit des Spritzgiessens im Formwerkzeug länger dauert als der Prägevorgang.

Die Erfindung wird nachfolgend und mit Bezug auf die beigefügten Zeichnungen näher erläutert. Die Zeichnungen zeigen in
- Fig. 1: Preform im Querschnitt mit Rundkuppe wie er üblicherweise nach dem Stand der Technik hergestellt wird.
- Fig. 2: Preform im Querschnitt mit einer Boden- und Schultergeometrie, die durch einen Prägevorgang nach dem Spritzgiessprozess in der Nachkühlstation ausgeformt wurde und deren Wandstärkenverlauf an der Schulter und zum Angusspunkt beliebig verändert werden kann.
- Fig. 3a: Beispielhafter Aufbau einer einstufigen, rotativen Spritzstreckblas-Produktion von PET Hohlkörpern mit Konditionierstation nach der Drehbewegung des Drehtellers.
- Fig. 3b: Beispielhafter Aufbau einer einstufigen, rotativen Spritzstreckblas-Produktion von PET Hohlkörpern mit Konditionierstation mit geschlossenen Werkzeugen beim Spritzgiess-, Präge- und Konditionierprozess, sowie beim Blas- und Auswurfprozess.
- Fig. 3c: Beispielhafter Aufbau einer einstufigen, rotativen Spritzstreckblas-Produktion von PET Hohlkörpern mit Konditionierstation vor der Drehbewegung des Drehtellers.
- Fig. 3d: Draufsicht auf einen beispielhaften Aufbau mit Drehteller und den vier Prozessstationen Spritzgiessen, Konditionieren und Prägen, Blasen und Auswerfen
- Fig. 4a: Schnittansicht einer einzelnen Prägevorrichtung bestehend aus Kühlhülse mit individueller Bodenkontur, einem Preform vor dem Prägevorgang und einem Prägekörper mit schwimmender Lagerung, der geometrisch mit Bodenkontur der Kühlhülse festgelegt wurde. Der Prägedorn ist individuell für den Prägevorgang optional axial angetrieben.
- Fig. 4b: Schnittansicht wie 4a mit eingeleitetem Prägevorgang.
- Fig. 4c: Schnittansicht wie 4a mit vollzogenem Prägevorgang.
- Fig. 5a: Schematische Schnittansicht einer Prägevorrichtung, für einen Antrieb zum mechanischen Prägekrafteaufbau durch Federn, bestehend aus einer Kühlhülse mit einem vergrösserten Hohlraum an Boden und Schulter und einem Prägedorn, welche gemeinsam die optimierte Geometrie im Bodenbereich und an der Schulter aufweisen.
- Fig. 5b: Schematische Schnittansicht wie 5a, jedoch mit einem hybriden (pneumatisch und mechanisch) Antrieb zum Prägekraftaufbau.
- Fig. 5c: Schematische Schnittansicht wie 5a, jedoch mit einem pneumatischen Prägekraftaufbau.
- Fig. 5d: Schematische Schnittansicht wie 5a, jedoch nur mit Ausprägung der Schulter.
- Fig. 6a-c: Prägeablauf der Preformkuppe durch geometrisch vorbestimmten Prägekörper und Kühlhülse.
- Fig. 6d: Geometrisch vorbestimmter Prägekörper im Zusammenspiel mit einer Kühlhülse, der im Angussbereich eine Materialansammlung erlaubt.
- Fig. 6e: Geometrisch vorbestimmter Prägekörper im Zusammenspiel mit einer Kühlhülse aus formflexiblem Material, der während des Prägens die gewünschte Kontur annimmt.
- Fig. 7a: Geometrisch vorbestimmter Prägekörper im Zusammenspiel mit einer Kühlhülse, die zur Oberflächenvergrösserung Gravuren aufweisen und/oder durch aufgeraut sind.
- Fig. 7b: Geometrisch vorbestimmter Prägekörper im Zusammenspiel mit einer Kühlhülse, die geometrisch auf den Formflaschenboden, wie in diesem Beispiel oval abgestimmt ist.

Die Zeichnungen sollen im Folgenden die Erklärung des Prägevorganges der Preformkuppe und der Schulter unterstützen. Für diese Ausführungen wurde die einstufige PET-Flaschenherstellung herangezogen. Beim zweistufigen Verfahren ist der Prägeprozess abgesehen vom Preformtransport und dass die Kühlhülse nicht temperiert, sondern intensiv gekühlt ist weitestgehend identisch.

FIG 1 zeigt einen nach Stand der Technik hergestellten Preform 1, i.d.R. mit einer kugelförmigen Kuppe 4, die aber auch andere Geometrien aufweisen kann. Dabei weist die Wandstärke der Preformkuppe 4 i.d.R. ca. 80% der Wandstärke des Preformschaftes 3 auf. Für den Blasprozess optimierte Preformen FIG 2 mit dünneren Wandstärken am Anguss 24 und der Schulter 38 können auf Grund der Gefahr, dass die Schmelze einfriert nicht realisiert werden, da sonst der Nachdruck, welcher dem Schrumpfprozess des Preforms während des Abkühlprozesses entgegenwirkt, nicht mehr in den entscheidenden dickwandigeren Bereichen, besonders am Hals, wirken kann.

Um mit der herkömmlichen Spritzgießtechnik dennoch einen wie in den Fig 2 gezeigten Preform 2 produzieren zu können, wird der Preform 1 zunächst in üblicher Weise in einem Formwerkzeug 8 hergestellt und nach dem ersten Abkühlen und dem Öffnen des Formwerkzeugs beispielsweise rotativ zur Konditionier- und Prägestation 7 transportiert. Bei einstufigen Systemen kann der Drehteller 9 über Transportleisten 6 verfügen, die je Station einmal vorhanden sind und jeweils mit formgebenden Neckringen 27 ausgestattet sind. Die Neckringe 27 sind grundsätzlich Teil des Spritzgiesswerkzeuges 8, werden aber im weiteren Prozessverlauf als Transportmittel zu den anderen Stationen genutzt.

Sowohl die Spritzgießstation 31 mit Formwerkzeug 8 wie auch die Transportleisten 6 sind aus dem Stand der Technik hinlänglich bekannt.

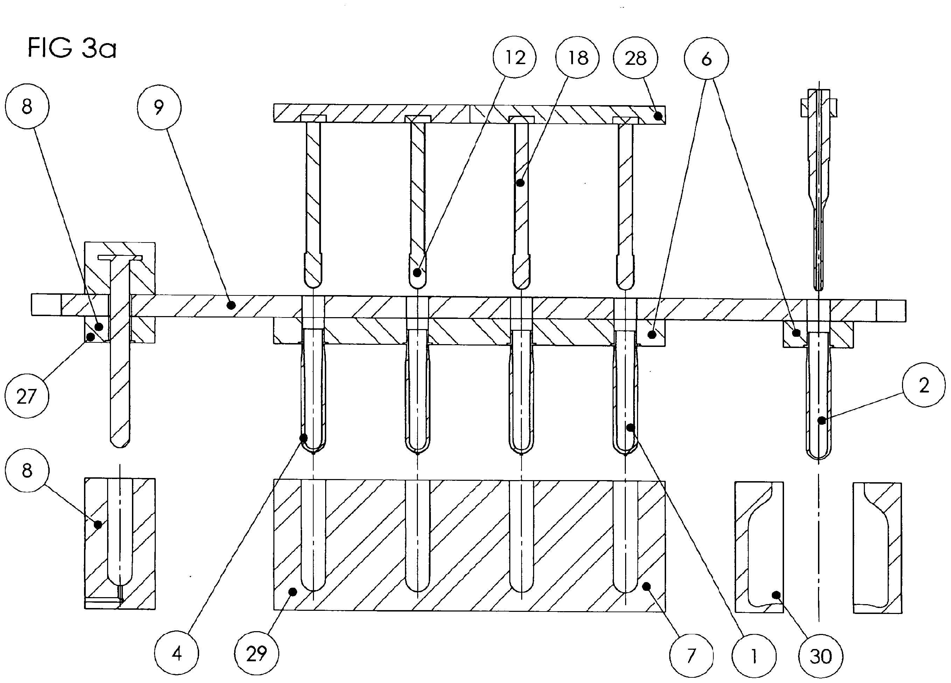

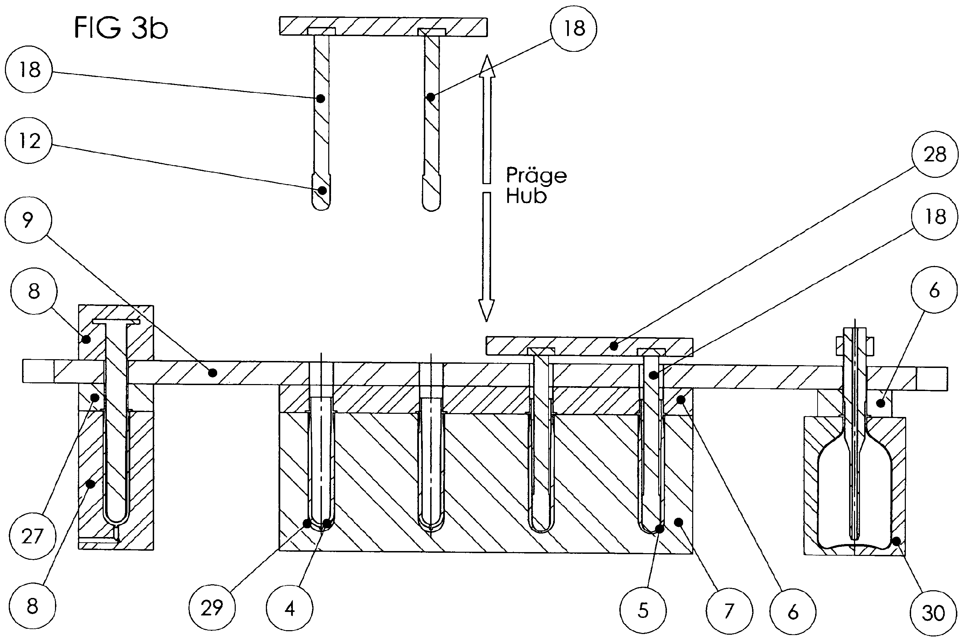

In Fig. 3a ist sowohl der Drehteller 9 als auch die Prägeeinheit 28 in Ihrer oberen Position dargestellt. Die Kunststoffprodukte wurden jeweils durch die Drehbewegung des Drehtellers 9 jeweils zur nächsten Station befördert. So sind die gerade spritzgegossenen Preformen 1 nun in der Position der Konditionierstation 7. Die zunächst hergestellten Preformen FIG 1 weisen eine herkömmliche Form mit einer relativ dicken Wandstärke in der Bodenkuppe 4 und der Schulter 38 auf und sind freihängend. Der nächste Bearbeitungsschritt wird in FIG. 3b dargestellt, in dem der Drehteller 9 in seine untere Position abgesenkt wird. Dadurch ist die Spritzstation 31 geschlossen und es kann der Spritzgiessprozess eingeleitet werden. Zudem sind mit derselben Bewegung die Preformen 1 der Konditionierstation 7 in konditionierte Aufnahmen 29, welche beispielsweise flüssig temperiert werden, gesetzt worden. Dort kann nach einer frei bestimmbaren Zeit auch der Prägeprozess durchgeführt werden, in dem die Prägeeinheit 28 einen Prägehub durch Herabfahren in die untere Position durchführt bei dem der Preformkuppe 4 und / oder die Schulter 38 ausgeprägt werden. In der Blasstation 30 findet zeitgleich der Blasprozess statt, währen in der Auswurfstation 15 die fertigen Hohlkörper ausgeworfen werden.

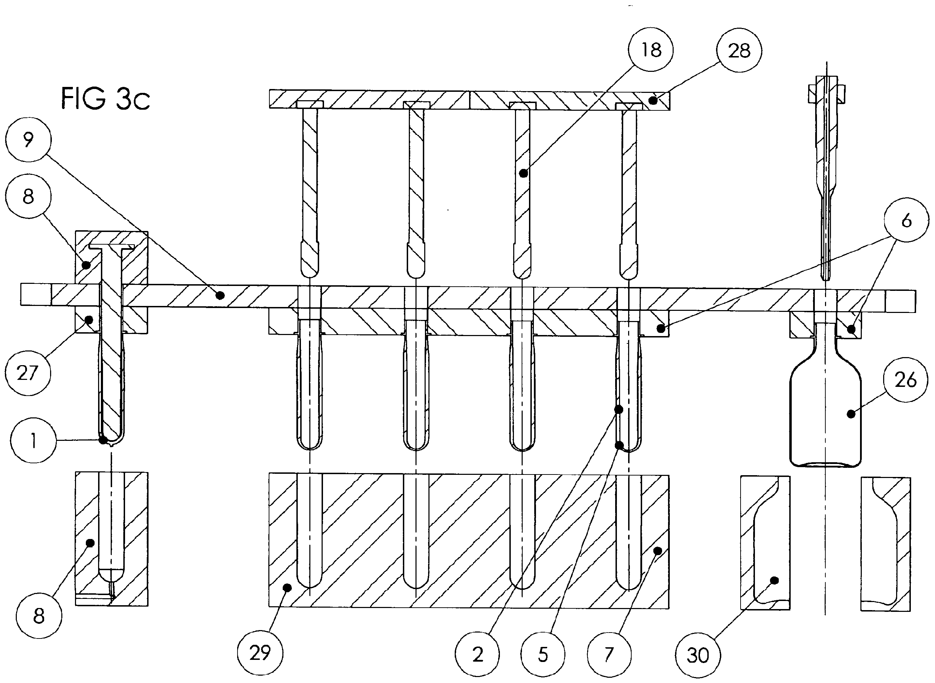

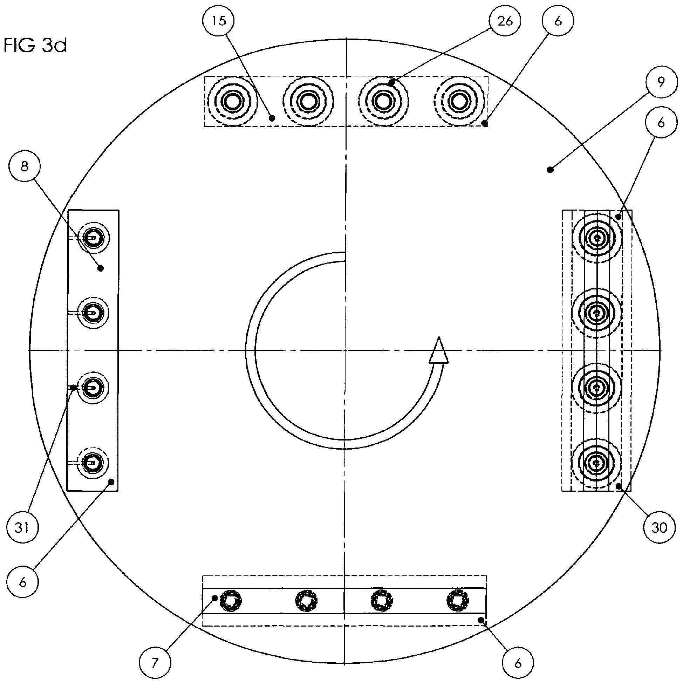

In FIG 3c wird der Drehteller 9 wieder nach oben gefahren, um den rotativen Weitertransport der Kunststoffprodukte, also Preformen 1, Preformen 2 und Hohlkörper 26 in die nächste Station ausführen zu können. In FIG 3d ist der Drehteller 9 und die Prozessstationen 31, 7, 30 und 15 in der Draufsicht dargestellt. Selbstverständlich kann eine solche Einstufenmaschine auch lineare Transportschritte machen, die beispielsweise durch Ketten ermöglicht werden. Diese Bauart hat den Vorteil, dass die Maschine kompakter wird, speziell wenn eine höhere Anzahl von Prozessstationen, wie z.B. ein oder mehrere UV-Heizungen zusätzlich gewünscht werden. Für diese Erfindung ist dabei entscheidend, dass in mindestens einer Station zwischen dem Spritzgiessen 31 und dem Blasen 30 in einer Station der Preform durch Prägen optimiert wird.

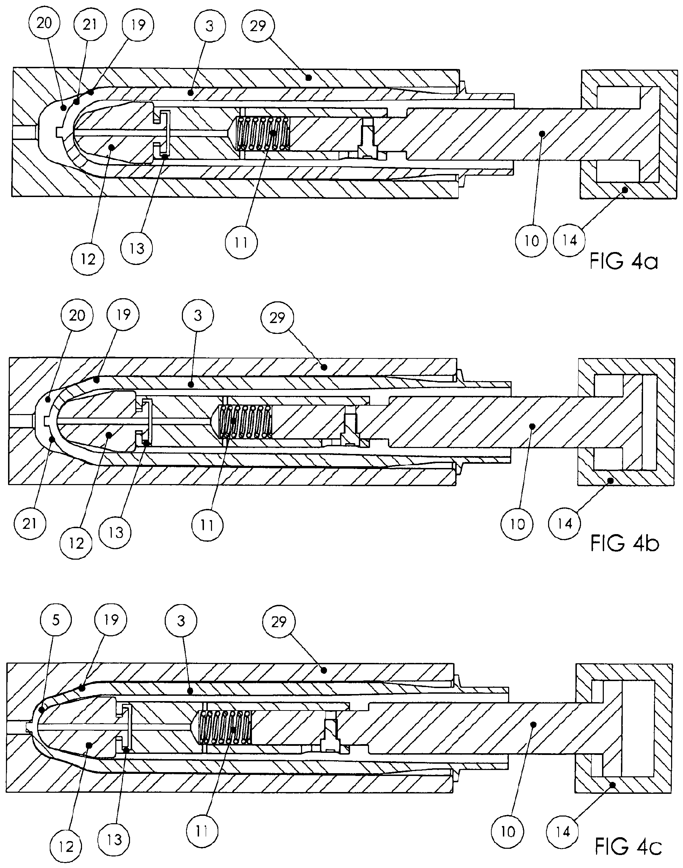

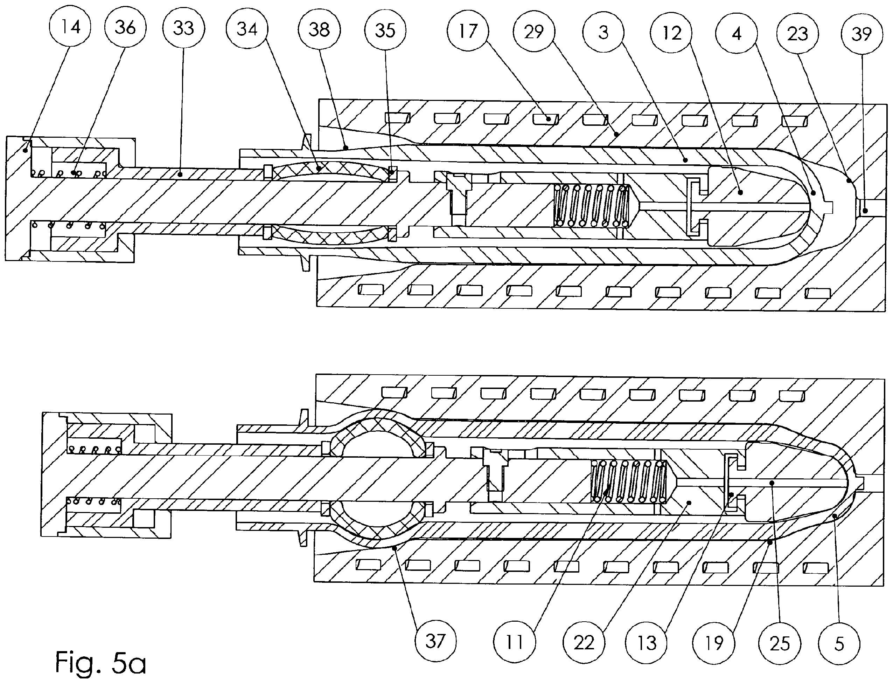

Die in FIG. 4a dargestellten Preformpositionierung zeigt, dass die Konditionieraufnahme 29 im Bodenbereich eine vergrösserte Geometrie 20 aufweist, wodurch der direkte Kontakt am Preformboden 21 verhindert wird. Die Fig. 5a zeigt zudem auch die Ausnehmung für die Preformschulter 37. Dadurch wird direkt nach dem Konditionierbeginn im Bereich des Preformschaftes 3 der Preformkuppe 4 und der Schulter 38 Zeit gelassen, um sich thermisch stabilisieren und damit rückerweichen zu können.

Um das Formwerkzeug 8 schnellstmöglich für den nächsten Spritzzyklus bereitzustellen, werden die Preformen 1 durch die im Drehteller 9 montierten Transportleisten 6 möglichst schnell mit den Drehtellerbewegungen zur Konditionierstation 7 transportiert. Dabei nehmen sie dann in der Konditionieraufnahme 29 eine Position ein, die die Preformmündungen mit der gleichen Anzahl an Prägedornen 18, welche auf der Prägeeinheit 28 montiert sind, axial fluchten lässt. Die Prägeeinheit 28 besitzt einen eigenen vertikalen Antrieb, der hier nicht dargestellt ist. Durch den vertikalen Prägehub werden die Prägedorne 18 in die Preformmündungen eingeführt und können, am Preformboden angekommen, diesen in ihre optimale Form bringen, was durch Vakuum unterstützt werden kann. Im selben Arbeitsschritt kann durch einen elastischen Prägekörper 34 die Preformschulter 38 ebenfalls geweitet werden. Selbstverständlich kann jeder Prägedorn 18 auch einen individuellen Antrieb 14 aufweisen. Der Aufbau der Prägedorne ist in FIG 4a-c und FIG 5a-c dargestellt.

Die Prägedorne 18 bestehen im Wesentlichen aus einer Kolbenstange 10, eine Kolbenstangenverlängerung 22, die mit einer Druckfeder 11 axial zur Kolbenstange gefedert ist und einem Prägekörper 12 der radial schwimmend 13 gelagert ist. Der Prägekörper 12 am vorderen Ende des Prägedorns 18 kann wahlweise mit elastische oder starrem Material ausgeführt werden und optional temperiert oder wassergekühlt sein kann. Zudem verfügt der Prägekörper 12 idealer Weise über eine Entlüftungsbohrung 25. Für die Prägung des Schulterbereiches ist ein elastischer Prägekörper 34 vorgesehen, der schwimmen von zwei Scheiben 35 gelagert ist. Diese Scheiben werden durch den Kolben 33 zusammengedrückt, so dass der elastische Prägekörper 34 sich aufweitet. Um die Prägekräfte mit denen der Kuppenprägung abstimmen zu können, kann hier bei Bedarf noch eine weitere Feder 36 zum Einsatz kommen.

Die Kraft und der Zeitpunkt für den eigentlichen Prägehub kann durch einen eigenen gesamthaften Antrieb der Prägeeinheit 28 und die Auslegung der Druckfedern 11 und 36 bestimmt werden. Die Verwendung von individuellen axialen Antrieben 14 kann dann sinnvoll werden, wenn der Prägezeitpunkt individuell zeitlich verzögert werden soll. Bringen alle individuellen axialen Antriebe 14 die gleiche Prägekraft in den Prägevorgang, kann auf die Druckfeder 11 verzichtet werden.

Die Preformen FIG 1 sind durch die Innenkontur der Konditionieraufnahme 29 so gelagert, dass sie trotz der vergrösserten Bodengeometrie 20 reproduzierbar positioniert und axial fixiert sind. Dies wird dadurch erreicht, dass die Bodengeometrie 20 der Konditionieraufnahme 29 so ausgelegt ist, dass die Preformkuppe 4 auf einer kleinen Kreisringfläche in Kugelform 19, welche eine Hinterschneidung bildet, sicher aufsteht. Diese Fläche ist so ausgelegt, dass sich der warme Preformschaft 3 während des Prägens nicht durch die axialen Kräfte in der Konditionieraufnahme 29 verkeilt oder längt.

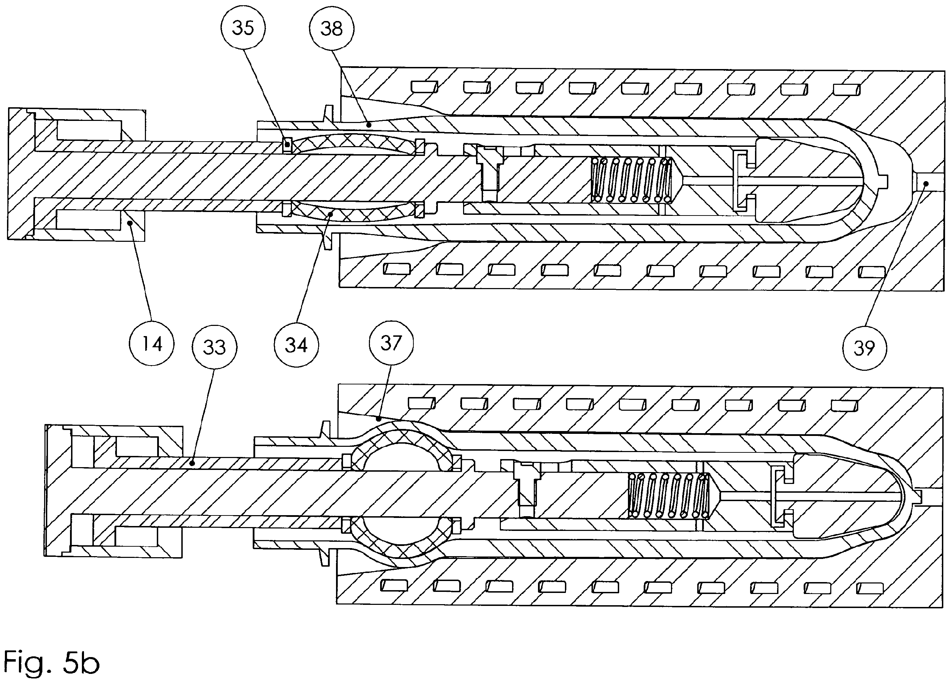

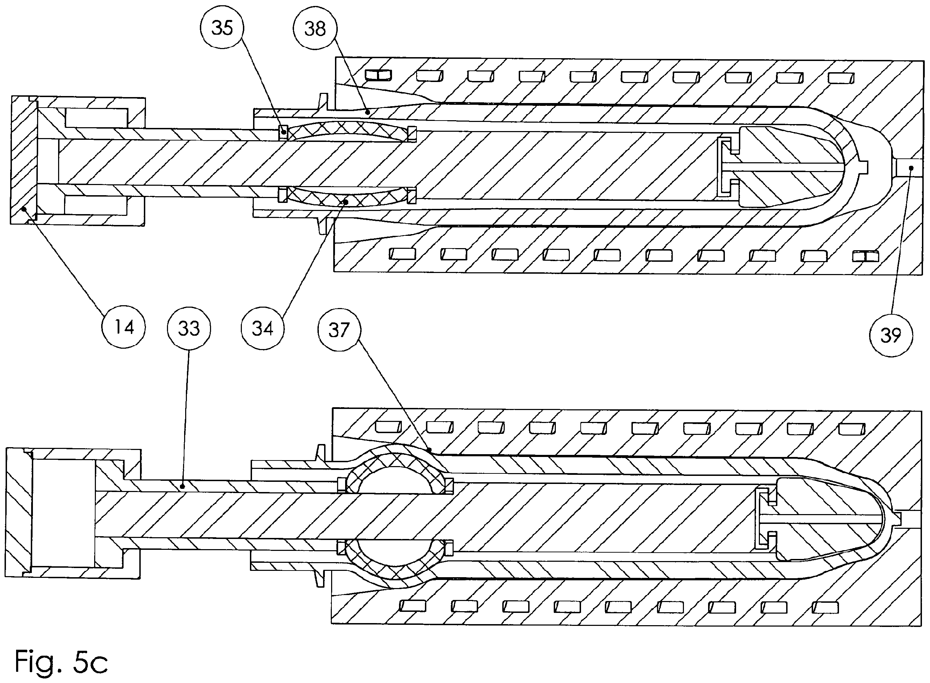

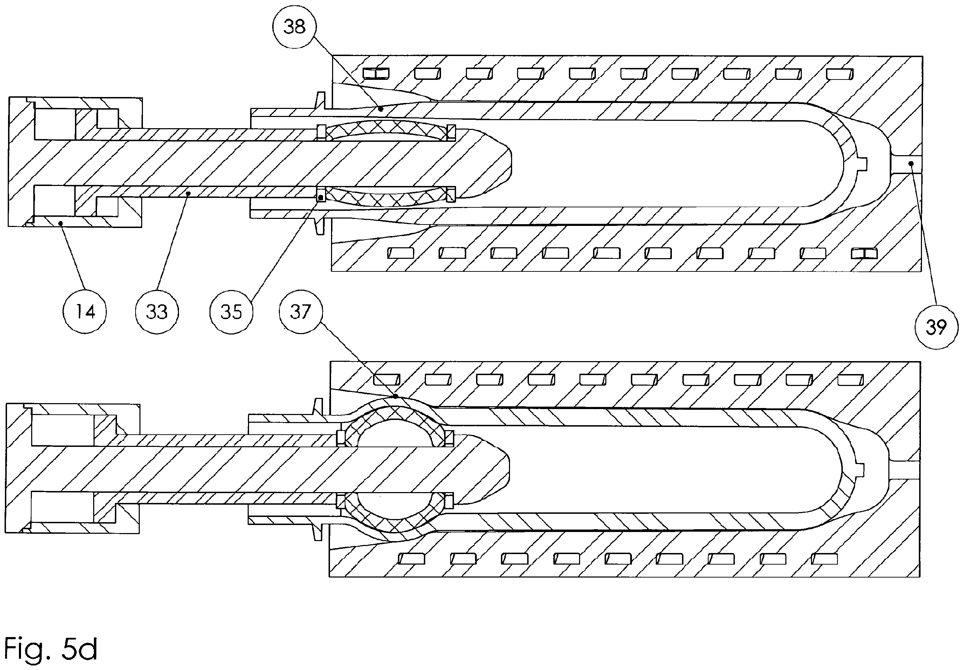

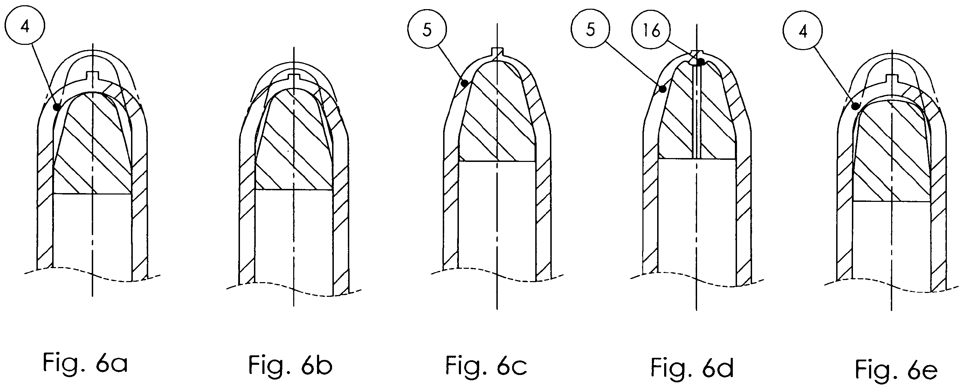

Der Prägevorgang selbst wird in Fig. 5 und FIG 6a-c dargestellt. Bedingt durch das reproduzierbare Wärmeprofil in der Preformkuppe 4, mit der höchsten Temperatur am Angusspunkt 24 die aber zum Preformschaft graduell abnimmt, kann es sinnvoll sein den Prägekörper 12 als erstes dort anzusetzen. Es gibt aber auch Anwendungen, bei denen es mehr Sinn macht, dass direkt am Angusspunkt 24 eine kleine Materialansammlung verbleibt, die beispielsweise durch eine Aushöhlung des Prägekörpers 16 erzeugt werden kann. Darüber hinaus ist es auch möglich formflexible Prägekörper FIG 6e einzusetzen, die dann nicht direkt am Angusspunkt 24 ansetzen müssen. Durch ihre Verformbarkeit nehmen sie erst mit dem Abschluss des Prägevorganges ihre optimale Form im Angussbereich 24 an, wodurch dort gezielt mehr Material verbleiben kann. Auch diese Prägevorgänge können ggf. mit angelegtem Vakuum am Kühlhülsenboden 39 unterstützt werden.

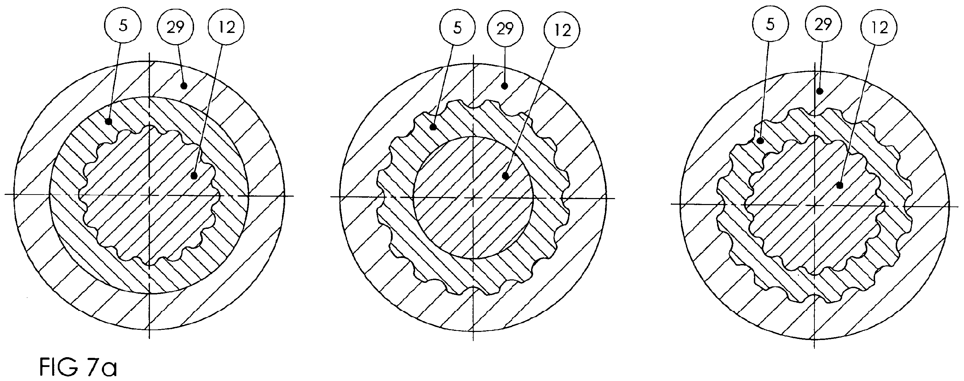

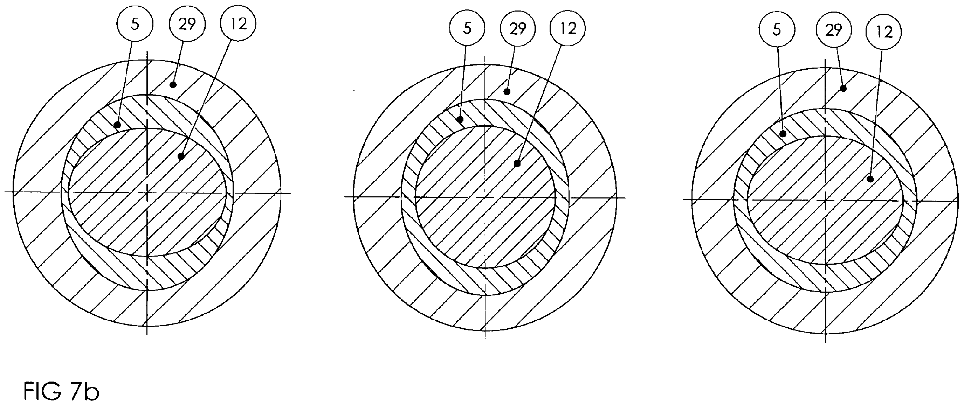

Eine weitere Ausführungsform der Prägeeinheit gemäss FIG 7 a und b kann im Prägekörper 12 oder ganz besonders im Boden der Konditionieraufnahme 29 verschiedene Arten von Nuten oder Gravuren enthalten, die zur zusätzlichen Oberflächenvergrösserung dienen. Ein Aufrauen der Oberfläche unterstützt diese Massnahme zusätzlich. Eine besondere Ausführungsform könnten spezielle Geometrien sein, die die Herstellung von beispielsweise ovalen Flaschenböden oder Flaschenböden mit Füsschen unterstützt.

Durch den beschriebenen graduellen weiteren Temperaturverlauf der Preformkuppe 4 in Richtung des Preformschafts 3 gibt das Material während des Prägevorganges zunehmend schwerer nach, wodurch die Wandstärke dort ebenfalls graduell immer weniger reduziert wird. Dieser Effekt kann durch eine ballige Bodenkontur 23 weiter unterstützt werden, da dort das plastische Material während des Prägens vom Preformschaft 3 zum Angusspunkt 24 über die intensiv gekühlte Oberfläche abrollt und damit der Effekt des graduell abnehmenden Wandstärkenverlaufes zusätzlich unterstützt wird. Dieser Effekt ist für den späteren Blasprozess gewünscht, welcher den Preformkörper biaxial verstreckt. Dieser Verstreckungsvorgang kann besonders im Angussreich nicht mehr beeinflusst werden, mit dem Resultat, dass es dort eine erhebliche Materialanhäufung gibt.

Dies bedingt sich durch den Reckstangenkontakt mit dem Preform in der Blasstation und die Hohlkörpergeometrie. Der vorangehende Prägevorgang, welcher den Boden bereits im Vorfeld verstreckt und damit die Wandstärke auf beispielsweise die Hälfte der vorherigen Wandstärke reduziert vermeidet solche Materialanhäufungen signifikant.

Die nun durch mechanisches Prägen optimierte Preformkuppe 5 wird durch die nun geringere Wandstärke und die vergrösserte Oberfläche besonders im vorher heissesten Bereich, dem Angusspunkt 24, ebenfalls auf die optimale Temperatur für den Blasprozess gebracht werden. Auch die nun dünnwandigere Schulter profitiert vom gleichen Effekt.

Ist der Prägevorgang abgeschlossen, können die Prägedorne 18 zu einem prozessabhängig sinnvollen Zeitpunkt jederzeit wieder hochgefahren werden. Die nun mit dünnwandigen Böden und Schultern optimierten Preformen 2 können je nach Bauart der Maschine in die nächste Station transportiert werden, wo sie - wie hier im Beispiel - zu Hohlkörpern aufgeblasen werden oder einen zusätzlichen Heizprozess durchlaufen können. Der Prägevorgang kann beim einstufigen Verfahren selbstverständlich auch erst in der Station direkt vor dem Blasprozess ausgeführt werden.

### Bezugszeichenliste

- 1: Preform nach Stand der Technik
- 2: Preform mit optimiertem, dünnwandigem Boden
- 3: Preformschaft
- 4: Preformkuppe nach Stand der Technik
- 5: Durch Prägen optimierte Preformkuppe
- 6: Transportleiste
- 7: Konditionierstation
- 8: Formwerkzeug
- 9: Drehteller
- 10: Kolbenstange
- 11: Druckfeder
- 12: Prägekörper
- 13: Radial schwimmende Lagerung des Prägekörpers
- 14: Individueller Antrieb des Prägedorns
- 15: Auswurfstation
- 16: Aushöhlung am Prägekörper
- 17: Flüssigtemperierung
- 18: Prägedorn
- 19: Bodenkontur mit abstützendem Kreisring in Kugelform
- 20: Vergrösserte Kühlhülsengeometrie
- 21: Bodenfläche ohne Kühlkontakt
- 22: Kolbenstangenverlängerung
- 23: Ballige Bodenkontur
- 24: Angusspunkt
- 25: Entlüftungsbohrung
- 26: Hohlkörper
- 27: Neckring
- 28: Prägeeinheit
- 29: Konditionieraufnahme
- 30: Blasstation
- 31: Spritzstation
- 32: durch Prägen optimierte Schulter
- 33: Druckkolben für elastischen Prägekörper
- 34: elastischer Prägekörper
- 35: Haltescheibe
- 36: Feder für Verformungskörper
- 37: Ausnehmung mit Verformungskontur der Preformschulter
- 38: Preformschulter
- 39: angelegtes Vakuum am Kühlhülsenboden

## Patentansprüche

1. Verfahren zur Herstellung eines Preforms (1) mit optimierter Boden- und Schultergeometrie, wobei der fertig hergestellte Preform (1) eine dünnere Wandstärke im Bodenkuppenbereich (4) und im Schulterbereich (38) als im Preformschaft (3) aufweist und dessen Wandstärke sich im Verlauf vom Hals und vom Anguss (24) zum Preformschaft (3) graduell angleicht, wobei das Formwerkzeug (8) nach Erstarren der Aussenhaut nach erster Kühlung geöffnet wird, die Preforms (1) mittels Transportvorrichtungen (6) aus dem geöffneten Formwerkzeug (8) aufgenommen werden, die Preforms (1) in Konditionierstationen (7), deren Aufgabe es je nach Verfahren ist, die Preformen (1) entweder auf ein blasfähiges Temperaturniveau von 90-150°C einzustellen oder schnellstmöglich abzukühlen, eingesetzt werden, wobei die Preforms (1) in Konditionierhülsen durch direkten Kontakt vor dem Prägevorgang bis auf die Preformkuppe (4) konditioniert bzw. gekühlt werden, wobei somit die plastisch verformbare Preformkuppe (4) und die Preformschulter (38) mechanisch mit einem Prägekörper (18) in Abhängigkeit zur Konditionierstation (7) entsprechend reproduzierbar durch Prägen verformt wird, wobei die innere Kontur der Konditionierstation (7) und des Prägekörpers (18) derart ausgestaltet sind, dass diese Konturen weitestgehend nach dem Verformungsvorgang am Preform (1) reproduzierbar bildbar sind, während die Preformkuppen (4) und Schultern (38) nach dem Prägevorgang durch die Wandberührung der Konditionierstation (7) ebenfalls konditioniert werden.

2. Verfahren nach Anspruch 1, **dadurch gekennzeichnet, dass** die Konditionierungen der Konditionierstation (7) den Preformschaft (3) bereits thermisch optimiert, während die Preformkuppe (4) und die Preformschulter (38) wegen fehlenden Kontaktes eine freie Rückerweichung erfahren.

3. Verfahren nach Anspruch 2, **dadurch gekennzeichnet, dass** sich in den zu prägenden Bereichen ein Temperaturbereich zwischen 90° und 150 ° einstellt.

4. Verfahren nach einem der Ansprüche 1 bis 3, **dadurch gekennzeichnet, dass** ein geometrisch bestimmter Prägedorn (18) in Kombination mit einer geometrisch bestimmten Boden- und Schulterkontur den plastischen Kunststoff der zu prägenden Bereiche so lange verformt, bis das Volumen zwischen beiden Konturen fast oder völlig mit Kunstststoff ausgefüllt ist und damit den Prägehub begrenzt.

5. Verfahren nach einem der Ansprüche 1 bis 4, **dadurch gekennzeichnet, dass** während des Prägevorganges der Preform (1) axial am Stützring und/oder im Kuppenbereich (4) innerhalb der neuen Bodenkontur durch einen Kreisring in Kugelform (19) abgestützt wird.

6. Verfahren nach einem der vorhergehenden Ansprüche, **dadurch gekennzeichnet, dass** der Prägevorgang in jedem Prozessteil zeitlich frei bestimmbar ist.

7. Verfahren nach einem der vorhergehenden Ansprüche, **dadurch gekennzeichnet, dass** die Prägekraft durch mechanische oder pneumatische Federn (36) für jeden Preformbereich ob Boden (4) oder Schulter (38) individuell einstellbar ist.

8. Verfahren nach einem der vorhergehenden Ansprüche, **dadurch gekennzeichnet, dass** die Prägekörper (12) temperiert oder gekühlt werden können.

9. Verfahren nach einem der vorhergehenden Ansprüche, **dadurch gekennzeichnet, dass** die Kühlhülse (29) und/ oder der Prägekörper (18) den Preformboden (4) für spezielle Anforderungen an Flaschenformen vorformen können.

10. Verfahren nach einem der vorhergehenden Ansprüche, **dadurch gekennzeichnet, dass** die Schulterprägung unabhängig von der Preformkuppenprägung ausgeführt werden kann.

11. Verfahren nach einem der vorhergehenden Ansprüche, **dadurch gekennzeichnet, dass** die Preformkuppenprägung unabhängig von der Schulterprägung ausgeführt werden kann.

12. Verfahren nach einem der vorhergehenden Ansprüche, **dadurch gekennzeichnet, dass** die Preformkuppenprägung durch Vakuum in der Kühlhülse (12) durchgeführt werden kann oder dies beim mechanischen Vorgang unterstützt.

13. Vorrichtung zur Herstellung eines Preforms (1) mit einer für den Blasprozess optimierten Kuppen- und Schultergeometrie, wobei der fertig hergestellte Preform (1) am Angusspunkt (24) und in der Preformschulter (38) eine dünnere Wandstärke als im Schaftbereich (3) aufweist und dass der weitere Wanddickenverlauf in der Kuppe (4) vom Angusspunkt (24) als auch vom Schulterbereich (38) ausgehend sich graduell der Wandstärke des Preformschaftes (3) anpasst, wobei
ein Formwerkzeug (8) mit einem oder mehreren Formkavitäten für die erste Formgebung Preform-Geometrien verantwortlich ist, eine Spritzgiessvorrichtung (31) Kunststoffrohware plastifiziert um diese plastische Masse in die Kavitäten eines geschlossenen Formwerkzeuges (8) unter Druck einzubringen, eine Transportvorrichtung (6) die Preformen (1) in eine Konditionierstation (7) befördert und dort in eine Konditionieraufnahme (29) deren innere Geometrie den Preformschaft (3) durch Flächenkontakt thermisch beeinflusst, nicht aber, oder nur teilweise den Bereich des Preformbodens (4) und der Schulter (38), Dorne mit gefederten und radial schwimmend gelagerten Prägekörpern (12), axial in die offenen Preformen (1) eintauchen, durch die speziell ausgelegte Geometrie der Kühlhülse (29) und des Prägekörpers (12) sowie die axiale Bewegung des Prägekörpers (12), im Bereich der Preformkuppe (4) und der Schulter (38) ein Hohlraum entsteht, der bevorzugt die Form des fertigen Preforms (1) beschreibt.

14. Vorrichtung nach einem der vorhergehenden Ansprüche, **dadurch gekennzeichnet, dass** der Prägekörper (12) aus elastischem (z.B. Silikon) oder starrem (z.B. Teflon) und wärmeleitendem Material hergestellt sein kann.

15. Vorrichtung nach einem der vorhergehenden Ansprüche, **dadurch gekennzeichnet, dass** der Prägekörper (12) gekühlt oder temperiert sein kann.

16. Vorrichtung nach einem der vorhergehenden Ansprüche, **dadurch gekennzeichnet, dass** die Konditionieraufnahmen (29) flüssig temperiert sind.

17. Vorrichtung nach einem der vorhergehenden Ansprüche, **dadurch gekennzeichnet, dass** die Prägekörper (12) axial federnd gelagert sind und die Federkräfte individuell für den Preformboden (4) und die Preformschulter (38) bestimmt werden können.

18. Vorrichtung nach einem der vorhergehenden Ansprüche, **dadurch gekennzeichnet, dass** die Prägekörper (12) axial federnd gelagert sind und die Federkräfte individuell für jede Produktionskavität bestimmt werden können.

19. Vorrichtung nach einem der vorhergehenden Ansprüche, **dadurch gekennzeichnet, dass** die Prägekörper (12) radial schwimmend gelagert sind und der Prägekörper (12) für den Preformboden (4) über eine axiale Entlüftungsbohrung verfügt.

20. Vorrichtung nach einem der vorhergehenden Ansprüche, **dadurch gekennzeichnet, dass** jeder Prägedorn (18) einen individuellen axialen Antrieb mit vorwählbaren Hublängen und Kräften besitzen kann.

21. Vorrichtung nach einem der vorhergehenden Ansprüche, **dadurch gekennzeichnet, dass** die Konditionieraufnahmen (29) im Bodenbereich (20) und / oder der Prägekörper (12) durch Aufrauen oder durch Gravuren die Oberfläche der Preformkuppe (4) weiter vergrössert wird.

22. Vorrichtung nach einem der vorhergehenden Ansprüche, **dadurch gekennzeichnet, dass** die Konditionieraufnahmen (29) im Bodenbereich (20) und / oder der Prägekörper (12) besondere Geometrien erhalten kann, die das Blasen von speziellen Formböden unterstützt.

23. Vorrichtung nach einem der vorhergehenden Ansprüche, **dadurch gekennzeichnet, dass** an die formgebende Kühlhülse (29) ein verstärktes Vakuum im Angussbereich (24) angelegt wird, welches den Prägevorgang unterstützt oder völlig ausführen kann.

## Claims

1. Method for producing a preform (1) with an optimised base and shoulder geometry, the finished preform (1) produced having a thinner wall thickness in a domed base region (4) and in a shoulder region (38) than in a preform shaft (3) and the wall thickness thereof gradually becoming equal to that of the preform shaft (3) in the progression from the neck and from the gate (24), wherein the mould (8) is opened once the outer skin has solidified after a first cooling, the preforms (1) are taken out of the opened mould (8) by conveyor devices (6), the preforms (1) are inserted in conditioning stations (7), the purpose thereof being either to set the preforms (1) to a blowable temperature level of 90-150°C or cool them as quickly as possible depending on the method, and the preforms (1), with the exception of the preform dome (4), are conditioned or cooled in conditioning sleeves by direct contact before the embossing operation, and the plastically deformable preform dome (4) and the preform shoulder (38) are thus mechanically deformed by embossing using an embossing body (18) so as to be correspondingly reproducible depending on the conditioning station (7), and the inner contour of the conditioning station (7) and of the embossing body (18) are designed so that these contours can be reproducibly replicated as far as possible on the preform (1) after the deforming operation whilst the preform domes (4) and shoulders (38) are likewise conditioned by the wall contact of the conditioning station (7) after the embossing operation.

2. Method as claimed in claim 1, **characterised in that** the conditioning of the conditioning station (7) already thermally optimises the preform shaft (3) whilst the preform dome (4) and preform shoulder (38) undergo a free re-softening due to the lack of contact.

3. Method as claimed in claim 2, **characterised in that** a temperature range of between 90° and 150° is set in the regions to be embossed.

4. Method as claimed in one of claims 1 to 3, **characterised in that** a geometrically specified embossing mandrel (18) in combination with a geometrically specified base and shoulder contour deforms the plastic material of the regions to be embossed in a plastic state until the volume between the two contours has been almost or completely filled with plastic material and thus limits the embossing stroke.

5. Method as claimed in one of claims 1 to 4, **characterised in that** during the embossing operation, the preform (1) is axially supported on the supporting ring and/or in the dome region (4) within the new base contour by a circular ring of spherical shape (19).

6. Method as claimed in one of the preceding claims, **characterised in that** the timing of the embossing operation is freely definable in every part of the process.

7. Method as claimed in one of the preceding claims, **characterised in that** the embossing force can be individually set for each preform region, be it base (4) or shoulder (38), by mechanical or pneumatic springs (36).

8. Method as claimed in one of the preceding claims, **characterised in that** the embossing bodies (12) can be temperature-controlled or cooled.

9. Method as claimed in one of the preceding claims, **characterised in that** the cooling sleeve (29) and/or the embossing body (18) are able to pre-form the preform base (4) to meet special requirements in terms of bottle shapes.

10. Method as claimed in one of the preceding claims, **characterised in that** embossing of the shoulders can be carried out independently of embossing of the preform domes.

11. Method as claimed in one of the preceding claims, **characterised in that** embossing of the preform domes can be carried out independently of embossing of the shoulders.

12. Method as claimed in one of the preceding claims, **characterised in that** embossing of the preform domes can be carried out in the cooling sleeve (12) by vacuum or the mechanical processing assisted by vacuum.

13. Device for producing a preform (1) with a dome and shoulder geometry optimised for the blowing process, the finished preform (1) produced having a thinner wall thickness at the gating point (24) and in the preform shoulder (38) than in the shaft region (3) and the progression of the rest of the wall thickness in the dome (4) gradually becomes equal to the wall thickness of the preform shaft (3) starting from the gating point (24) as well as from the shoulder region (38), wherein a mould (8) with one or more mould cavities is used for the first shaping of preform geometries, an injection moulding device (13) plasticises raw plastic material in order to introduce this plastic compound into the cavities of a closed mould (8) under pressure, a conveyor device (6) conveys the preforms (1) into a conditioning station (7) and an inner geometry of a conditioning holder (29) there thermally acts on the preform shaft (3) due to surface contact but not on, or only to a certain extent on, the region of the preform base (4) and the shoulder (38), mandrels with embossing bodies (12) mounted in a spring-biased and radially floating arrangement move axially into the open preforms (1), the specially designed geometry of the cooling sleeve (29) and the embossing body (12) as well as the axial movement of the embossing body (12) create a cavity in the region of the preform dome (4) and shoulder (38) which preferably describes the shape of the finished preform (1).

14. Device as claimed in one of the preceding claims, **characterised in that** the embossing body (12) may be made from elastic (e.g. silicone) or rigid (e.g. Teflon) and heat-conducting material.

15. Device as claimed in one of the preceding claims, **characterised in that** the embossing body (12) can be cooled or temperature-controlled.

16. Device as claimed in one of the preceding claims, **characterised in that** the conditioning holders (29) can be temperature-controlled using liquid.

17. Device as claimed in one of the preceding claims, **characterised in that** the embossing bodies (12) are mounted in an axially spring-biased arrangement and the spring forces can be determined individually for the preform bases (4) and the preform shoulders (38).

18. Device as claimed in one of the preceding claims, **characterised in that** the embossing bodies (12) are mounted in an axially spring-biased arrangement and the spring forces can be determined individually for every production cavity.

19. Device as claimed in one of the preceding claims, **characterised in that** the embossing bodies (12) are mounted in a radially floating arrangement and the embossing body (12) for the preform bases (4) has an axial venting bore.

20. Device as claimed in one of the preceding claims, **characterised in that** every embossing mandrel (18) may have an individual axial drive with pre-selectable stroke lengths and forces.

21. Device as claimed in one of the preceding claims, **characterised in that** the surface area of the preform dome (4) is made even larger by roughening or engraving provided on the conditioning holders (29) in the base region (20) and/or on the embossing bodies (12).

22. Device as claimed in one of the preceding claims, **characterised in that** the conditioning holders (29) in the base region (20) and/or the embossing bodies (12) may be provided with specific geometries which assist the blowing of special shaped bases.

23. Device as claimed in one of the preceding claims, **characterised in that** an increased vacuum is applied to the shape-imparting cooling sleeve (29) in the gating region (24) which assists or can entirely carry out the embossing operation.

## Revendications

1. Procédé de fabrication d'une préforme (1) ayant une géométrie de fond et d'épaule optimisée, où la préforme (1) finie dans sa fabrication présente, dans la zone (4) du culot du fond et dans la zone (38) de l'épaule, une épaisseur de paroi plus mince que celle dans le fût (3) de la préforme, fût dont l'épaisseur de paroi s'égalise graduellement, dans son profil, à partir du col et du point de moulage (24) jusqu'au fût (3) de la préforme, où l'outil de formage (8), après solidification de la peau extérieure, est ouvert après un premier refroidissement, les préformes (1) sont retirées de l'outil de formage ouvert (8), au moyen de dispositifs de transport (6), les préformes (1) sont introduites dans des postes de conditionnement (7) dont la tâche, en fonction du procédé, est soit de régler les préformes (1) à un niveau de température compris entre 90°C et 150°C et permettant le soufflage, soit de les refroidir le plus vite possible, où les préformes (1), à l'exception du culot (4) de la préforme, sont conditionnées ou refroidies dans des douilles de conditionnement, par contact direct avant le processus d'estampage, où le culot (4) de la préforme et l'épaule (38) de la préforme, plastiquement déformables, sont en conséquence, de façon reproductible, déformés par estampage, mécaniquement, avec un corps d'estampage (18), en fonction du poste de conditionnement (7) où le contour intérieur du poste de conditionnement (7) et du corps d'estampage (18) sont configurés de manière telle, que ces contours puissent, dans une large mesure, être formés de façon reproductible, sur la préforme (1), après le processus de déformation, tandis que les culots (4) de la préforme et les épaules (38) sont conditionnés également, après le processus d'estampage, par le contact avec les parois du poste de conditionnement (7).

2. Procédé selon la revendication 1, **caractérisé en ce que** le conditionnement du poste de conditionnement (7) optimise déjà thermiquement le fût (3) de la préforme, tandis que le culot (4) de la préforme et l'épaule (38) de la préforme subissent par réaction un ramollissement libre, en raison d'une absence de contact.

3. Procédé selon la revendication 2, **caractérisé en ce qu'**une plage de températures se forme entre 90° et 150°, dans les zones à estamper.

4. Procédé selon l'une quelconque des revendications 1 à 3, **caractérisé en ce qu'**un mandrin d'estampage (18), défini géométriquement, de façon combinée avec un contour de fond et d'épaule, défini géométriquement, déforme la matière plastique des zones à estamper, jusqu'au moment où le volume compris entre les deux contours est presque ou complètement comblé avec de la matière plastique et, ainsi, limite la course d'estampage.

5. Procédé selon l'une quelconque des revendications 1 à 4, **caractérisé en ce que**, au cours du processus d'estampage, la préforme (1) est supportée axialement sur la bague de support et/ou, dans la zone (4) du culot, à l'intérieur du nouveau contour du fond, ladite préforme est supportée par une bague annulaire se présentant sous forme de bille (19).

6. Procédé selon l'une quelconque des revendications précédentes, **caractérisé en ce que** le processus d'estampage peut être déterminé librement, dans le temps, dans chaque partie du processus.

7. Procédé selon l'une quelconque des revendications précédentes, **caractérisé en ce que** la force d'estampage peut être réglée individuellement, pour chaque zone de la préforme, qu'il s'agisse du fond (4) ou de l'épaule (38), par des ressorts mécaniques ou pneumatiques (36).

8. Procédé selon l'une quelconque des revendications précédentes, **caractérisé en ce que** les corps d'estampage (12) peuvent être tempérés ou refroidis.

9. Procédé selon l'une quelconque des revendications précédentes, **caractérisé en ce que** la douille de refroidissement (29) et/ou le corps d'estampage (18) peuvent assurer un préformage du fond (4) de la préforme, pour des exigences spéciales s'appliquant à des formes de bouteilles.

10. Procédé selon l'une quelconque des revendications précédentes, **caractérisé en ce que** l'estampage de l'épaule peut être réalisé indépendamment de l'estampage du culot de la préforme.

11. Procédé selon l'une quelconque des revendications précédentes, **caractérisé en ce que** l'estampage du culot de la préforme peut être réalisé indépendamment de l'estampage de l'épaule.

12. Procédé selon l'une quelconque des revendications précédentes, **caractérisé en ce que** l'estampage du culot de la préforme peut être réalisé en créant un vide dans la douille de refroidissement (12) ou bien cela est favorisé lors du processus mécanique.

13. Dispositif de fabrication d'une préforme (1) ayant une géométrie de culot et d'épaule optimisée pour le processus de soufflage, où la préforme (1) finie dans sa fabrication présente, au niveau du point de moulage (24) et dans l'épaule (38) de la préforme, une épaisseur de paroi plus mince que celle dans la zone (3) du fût, et en ce que l'autre profil d'épaisseur de paroi, dans le culot (4), s'adapte graduellement, à partir du point de moulage (24) ainsi également qu'à partir de la zone (38) de l'épaule, à l'épaisseur de paroi du fût (3) de la préforme, où un outil de formage (8) ayant une ou plusieurs cavités de formage est responsable du premier façonnage des géométries de la préforme, où un dispositif de moulage par injection (31) plastifie une matière première en plastique, pour introduire, sous pression, cette masse plastique dans les cavités d'un outil de formage fermé (8), où un dispositif de transport (6) transporte les préformes (1) dans un poste de conditionnement (7) et, de là, dans un logement de conditionnement (29) dont la géométrie intérieure influence thermiquement, par contact de surface, le fût (3) de la préforme, mais n'influençant pas ou seulement de façon partielle la zone du fond (4) de la préforme et de l'épaule (38), où des mandrins ayant des corps d'estampage (12) montés sur des ressorts et flottant radialement s'immergent axialement dans les préformes ouvertes (1) où, sous l'effet de la géométrie - conçue spécialement - de la douille de conditionnement (29) et du corps d'estampage (12) ainsi que sous l'effet du mouvement axial du corps d'estampage (12), un espace creux se forme dans la zone du culot (4) de la préforme et de l'épaule (38), espace creux qui décrit, de préférence, la forme de la préforme finie (1).

14. Dispositif selon l'une quelconque des revendications précédentes, **caractérisé en ce que** le corps d'estampage (12) peut être fabriqué à partir d'un matériau élastique (par exemple du silicone) ou rigide (par exemple du téflon) et conducteur de la chaleur.

15. Dispositif selon l'une quelconque des revendications précédentes, **caractérisé en ce que** le corps d'estampage (12) peut être refroidi ou tempéré.

16. Dispositif selon l'une quelconque des revendications précédentes, **caractérisé en ce que** les logements de conditionnement (29) sont tempérés en utilisant un liquide.

17. Dispositif selon l'une quelconque des revendications précédentes, **caractérisé en ce que** les corps d'estampage (12) sont montés sur des ressorts agissant axialement, et les forces des ressorts peuvent être déterminées individuellement pour le fond (4) de la préforme et pour l'épaule (38) de la préforme.

18. Dispositif selon l'une quelconque des revendications précédentes, **caractérisé en ce que** les corps d'estampage (12) sont montés sur des ressorts agissant axialement, et les forces des ressorts peuvent être déterminées individuellement pour chaque cavité de production.

19. Dispositif selon l'une quelconque des revendications précédentes, **caractérisé en ce que** les corps d'estampage (12) sont montés en flottant radialement, et le corps d'estampage (12) prévu pour le fond (4) de la préforme dispose d'un orifice axial de purge d'air.

20. Dispositif selon l'une quelconque des revendications précédentes, **caractérisé en ce que** chaque mandrin d'estampage (18) peut comporter un entraînement axial individuel ayant des longueurs de course et des forces pouvant être présélectionnées.

21. Dispositif selon l'une quelconque des revendications précédentes, **caractérisé en ce que** les logements de conditionnement (29) placés dans la zone (20) du fond et/ou le corps d'estampage (12) agrandissent encore, par des rugosités ou par des gravures, la surface du culot (4) de la préforme.

22. Dispositif selon l'une quelconque des revendications précédentes, **caractérisé en ce que** les logements de conditionnement (29) placés dans la zone (20) du fond et/ou le corps d'estampage (12) peuvent présenter des géométries particulières qui favorisent le soufflage de fonds moulés spéciaux.

23. Dispositif selon l'une quelconque des revendications précédentes, **caractérisé en ce qu'**un vide poussé, dans la zone de moulage (24), est appliqué à la douille de refroidissement (29) donnant la forme, vide qui favorise ou permet de réaliser complètement le processus d'estampage.
